# EUROPEAN PATENT APPLICATION

(11) **EP 4 768 376 A1**
(43) Date of publication of application: **01.07.2026**
(21) Application number: 25221365.7
(22) Date of filing: 08.12.2025
(51) Int. Cl.: B62J 25/04, B62J 25/06

(54) **STRADDLED VEHICLE WITH RETRACTABLE FOOTBOARDS**

(30) Priority: 26.12.2024 JP 2024230006
(71) Applicant: Yamaha Hatsudoki Kabushiki Kaisha, Iwata-shi, Shizuoka 438-8501 (JP)
(72) Inventor: Takiguchi, Shota, 4388501 Iwata-shi, Shizuoka (JP); Isozaki, Yoshiya, 4388501 Iwata-shi, Shizuoka (JP); Okada, Yoshitaka, 4388501 Iwata-shi, Shizuoka (JP); Hirano, Toshiki, 4388501 Iwata-shi, Shizuoka (JP)
(74) Representative: Grünecker Patent- und Rechtsanwälte PartG mbB

(57) **Abstract**

A straddled vehicle includes a pair of left and right retractable footboards. The pair of left and right retractable footboards are: disposed forward of a pair of left and right main footrests; members different from the pair of left and right main footrests; and configured to allow a main rider who is driving the straddled vehicle to place his/her feet thereon instead of on the pair of left and right main footrests while sitting on a main rider seat. The pair of left and right retractable footboards each include a main rider foot placement surface configured such that the main rider who is driving the straddled vehicle places his/her feet thereon while sitting on the main rider seat, and are each configured to be able to maintain two stable stationary states. The straddled vehicle is capable of improving the degree of freedom of a foot placement position at which a main rider places his/her foot while driving the straddled vehicle; improving the footing of the main rider; and improving the visibility of the main rider's foot and therearound.

## Description

The present invention relates to a straddled vehicle, and more specifically relates to a straddled vehicle having a pair of left and right retractable footboards disposed forward of a pair of left and right main footrests.

A main rider who drives a straddled vehicle sits on a main rider seat, and in this state, places his/her feet on a pair of left and right main footrests, while driving the straddled vehicle. Recently proposed is improving the degree of freedom of foot placement positions in a pair of left and right main footrests on which the main rider places his/her feet while the main rider is driving the straddled vehicle (for example, see JP 2008 - 6909 A). In the straddled vehicle according to JP 2008 - 6909 A, a pair of left and right footboards, which serve as a pair of left and right main footrests, each include a step floor portion and a footrest portion, which is inclined and is continuous with a forward portion of the step floor portion.

In the straddled vehicle according to JP 2008 - 6909 A, the pair of left and right footboards serving as the pair of left and right main footrests each have a long length in forward-rearward direction of the vehicle. This deteriorates the footing of the main rider.

It is the object of the present invention to provide a straddled vehicle capable of: improving the degree of freedom of a foot placement position at which the main rider places his/her foot while driving the straddled vehicle; improving the footing of the main rider; and improving the visibility of the main rider's foot and therearound.

According to the present invention said object is solved by a straddled vehicle having the features of independent claim 1. Preferred embodiments are laid down in the dependent claims.

With regard to the technical filed of the present teaching it has been considered to improve the footing of a main rider, it is conceivable that a pair of left and right foot placement portions on which the main rider places his/her feet while sitting on a main rider seat are each divided in forward-rearward direction of the vehicle. In view of the visibility of the main rider's feet and therearound, however, simply dividing the foot placement portion in the forward-rearward direction of the vehicle is not sufficient.

Accordingly, it is referred to a pair of left and right foot placement portions on which a main rider places his/her feet are each composed of a forward foot placement portion and a rear foot placement portion. In this configuration, the main rider who drives a straddled vehicle, in some case, places his/her feet on a pair of left and right forward foot placement portions while sitting on a main rider seat, and in another case, places his/her feet on a pair of left and right rear foot placement portions while sitting on the main rider seat. Differences between theses cases were examined, to result in a discovery that the case where the main rider places his/her feet on the pair of left and right forward foot placement portions and the case where the main rider places his/her feet on the pair of left and right rear foot placement portions occur in different traveling situations. For example, in an attempt to see a small step when traveling in an urban area, or in traveling an unpaved road, the main rider places his/her feet on the pair of left and right rear foot placement portions so that he/she can see up close. On the other hand, for example, in a case of traveling a highway over a long period, the main rider places his/her feet on the pair of left and right forward foot placement portions for far vision.

Using the pair of left and right rear foot placement portions as a pair of left and right main footrests and the pair of left and right forward foot placement portions as a pair of left and right retractable footboards, which are disposed forward of the pair of left and right main footrests, makes it possible to improve the visibility of the main rider's feet and therearound while enabling foot placement positions at which the main rider places his/her feet to be changed depending on traveling situations. To be specific, when the main rider places his/her feet on the pair of left and right main footrests, the pair of left and right retractable footboards are each brought into a retracted state, so that the visibility of the main rider's feet and therearound can be improved. In addition, the footing of the main rider can be improved because the pair of left and right main footrests are distant from the pair of left and right retractable footboards in forward-rearward direction of the vehicle.

Accordingly, the present teaching adopts the following configurations.
(1) A straddled vehicle including:
   a main rider seat on which a main rider who drives the straddled vehicle sits while driving the straddled vehicle;
   a pair of left and right main footrests configured to allow the main rider who is driving the straddled vehicle to place his/her feet thereon while sitting on the main rider seat; and
   a pair of left and right retractable footboards configured to allow the main rider who is driving the straddled vehicle to place his/her feet thereon instead of on the pair of left and right main footrests while sitting on the main rider seat, the pair of left and right retractable footboards being disposed forward of the pair of left and right main footrests, the pair of left and right retractable footboards being members different from the pair of left and right main footrests,
   the pair of left and right retractable footboards each including a main rider foot placement surface configured such that the main rider who is driving the straddled vehicle places his/her foot thereon while sitting on the main rider seat, the pair of left and right retractable footboards being each configured to be able to maintain two stable stationary states,
   the two stable stationary states including
      an unretracted in-use state, in which the main rider foot placement surface is visible in a plan view of the straddled vehicle so that the main rider who is driving the straddled vehicle is able to place his/her foot on the main rider foot placement surface while sitting on the main rider seat, and
      a retracted state, in which the main rider foot placement surface is less visible in a plan view of the straddled vehicle as compared to in the unretracted in-use state so that the main rider who is driving the straddled vehicle is not able to place his/her foot on the main rider foot placement surface while sitting on the main rider seat.

The straddled vehicle of (1) is capable of: improving the degree of freedom of a foot placement position at which the main rider places his/her foot while driving the straddled vehicle; improving the footing of the main rider; and improving the visibility of the main rider's foot and therearound. More details are given below.

**In** the straddled vehicle of (1), the pair of left and right retractable footboards are provided in addition to the pair of left and right main footrests. This can improve the degree of freedom of the foot placement position at which the main rider places his/her foot while driving the straddled vehicle.

The pair of left and right retractable footboards, which are members different from the pair of left and right main footrests, are disposed at a distance from the pair of left and right main footrests in the forward-rearward direction of the vehicle. This can improve the footing of the main rider.

If the pair of left and right retractable footboards are in the retracted state when the main rider places his/her feet onto the pair of left and right main footrests, the visibility of the main rider's feet and therearound can be improved.

The straddled vehicle is a vehicle including a saddle-type seat. The straddled vehicle is a vehicle configured such that a main rider rides astride a saddle. The straddled vehicle includes at least one front wheel and at least one rear wheel, for example. The straddled vehicle as explained in detail is a motorcycle. Alternatively, the present teaching relates to a motor tricycle whose front wheel or rear wheel is composed of a pair of left and right wheels, or may be a four-wheeled motor vehicle whose front wheel and rear wheel are each composed of a pair of left and right wheels. The straddled vehicle may be configured to be capable of turning in a leaning posture leaning toward the inside of a curve. When the straddled vehicle turns in a leaning posture toward the inside of a curve, at least one of the front wheel or the rear wheel of the straddled vehicle may lean toward the inside of the curve.

The straddled vehicle may not be required to include a pedal that the main rider manipulates with his/her foot when driving the straddled vehicle, for example. The straddled vehicle may not be required to include a shift pedal and/or a brake pedal, for example. The shift pedal is a pedal that the main rider manipulates with his/her foot in a shifting operation. The brake pedal is a pedal that the main rider manipulates with his/her foot in a braking operation. For example, in a case of the straddled vehicle including neither the shift pedal nor the brake pedal, the main rider does not need to change the foot placement position for the shifting operation and/or the braking operation.

The straddled vehicle may include a cowl. The cowl is configured to suppress a relative wind hitting the upper half of the main rider's body while the vehicle is traveling, for example.

The main rider seat is, for example, configured to satisfy at least one of (i) to (iv) below.
(i) The main rider seat is at least partially positioned forward or rearward of each of the pair of left and right main footrests in a vehicle side view.
(ii) The forward end of the main rider seat is positioned forward of the forward end of each of the pair of left and right main footrests in a vehicle side view, and the rear end of the main rider seat is positioned rearward of the rear end of each of the pair of left and right main footrests in a vehicle side view.
(iii) In a vehicle side view, the forward end of the main rider seat is positioned forward of the forward end of each of the pair of left and right main footrests, and is positioned rearward of the rear end of each of the pair of left and right retractable footboards.
(iv) In a vehicle side view, the main rider seat is positioned downward or rearward of a handlebar in a handle neutral position.

The handle neutral position refers to a position at which a handlebar is present when the straddled vehicle travels straight, for example. The handlebar is configured to allow the main rider who is driving the straddled vehicle to manipulate the handlebar with his/her hands while sitting on the main rider seat. The handlebar may be a single handlebar extending continuously in the vehicle width direction of the straddled vehicle, or may include a left handlebar and a right handlebar arranged at a distance from each other in the vehicle width direction of the straddled vehicle, for example.

Of the pair of left and right main footrests, the left main footrest is for the main rider to place his/her left foot thereon. The right main footrest is for the main rider to place his/her right foot thereon.

The pair of left and right main footrests may be arranged bilaterally symmetrical in a vehicle front view and/or in a vehicle plan view, or may not always need to be arranged bilaterally symmetrical, for example. The pair of left and right main footrests may have the same structure, or may have different structures, for example.

The pair of left and right main footrests are each provided to a member that constitutes a vehicle body, for example. The member includes a vehicle body frame or a member provided to the vehicle body frame, for example. The pair of left and right main footrests are each provided so as to constitute a part of the vehicle body, for example. The pair of left and right main footrests are each provided so as to be visible in a vehicle side view, for example.

The pair of left and right main footrests may each be a footrest peg or a footboard, for example. The footrest peg is configured to extend outward in the vehicle width direction from the vehicle body of the straddled vehicle, for example. The footboard is configured to, at a lateral side of the vehicle body of the straddled vehicle, extend both in the forward-rearward direction of the vehicle and in the vehicle width direction, for example. The footboard may be configured such that a part of it is inclined relative to the rest of it, for example.

The pair of left and right main footrests each have the foot placement surface on which the main rider who is driving the straddled vehicle places his/her foot while sitting on the main rider seat, for example. The foot placement surface is designed as appropriate in accordance with the shape of the main footrest, etc., for example. For example, in a case where the main footrest is a footrest peg, at least a part of a cylindrical surface of the footrest peg corresponds to the foot placement surface. For example, in a case where the main footrest is a footboard, at least a part of an upper surface of the footboard corresponds to the foot placement surface. The foot placement surface of the footboard may be configured such that a part of it is inclined relative to the rest of it, for example. The foot placement surface of the footboard may be configured such that a forward portion thereof is inclined relative to a rear portion thereof, for example.

The pair of left and right main footrests may each be of a fold-down type, or not of a fold-down type, for example. Here, the main footrest of the fold-down type is configured to rotate about a proximal end portion (inner end portion of the vehicle width direction) of the main footrest when an external force in the upward direction of the vehicle acts on the main footrest, for example. The main footrest of the fold-down type is configured to return to its original position when the external force no longer acts thereon, by using bias means such as a spring, for example. The main footrest of non-fold-down type is configured to not rotate about a proximal end portion of the main footrest even when an external force in the upward direction of the vehicle acts on the main footrest, for example.

The pair of left and right main footrests are, for example, each configured to satisfy at least one of (i) to (iii) below.
(i) In a vehicle side view, the main footrest is at least partially or entirely positioned rearward of the forward end of the main rider seat, or forward of the rear end of the main rider seat.
(ii) In a vehicle side view, the main footrest is positioned rearward of the forward end of the main rider seat, and forward of the rear end of the main rider seat.
(iii) In the up-down direction of the vehicle, the main footrest is positioned downward of the main rider seat.

Of the pair of left and right retractable footboards, the left retractable footboard is for the main rider to place his/her left foot thereon. The right retractable footboard is for the main rider to place his/her right foot thereon.

The pair of left and right retractable footboards may be arranged bilaterally symmetrical in a vehicle front view and/or in a vehicle plan view, or may not always need to be arranged bilaterally symmetrical, for example. The pair of left and right retractable footboards may have the same structure, or may have different structures, for example.

The pair of left and right retractable footboards are each provided to a member that constitutes a vehicle body, for example. The member includes a vehicle body frame or a member provided to the vehicle body frame, for example. The pair of left and right retractable footboards are each provided so as to constitute a part of the vehicle body, for example.

The pair of left and right retractable footboards are each configured to have an outer side surface in the vehicle width direction when in the retracted state, for example. The outer side surface in the vehicle width direction may be an inclined side surface that is configured to have its rear end positioned outward in the vehicle width direction relative to its forward end, for example.

As for the position in the forward-rearward direction of the vehicle, the pair of left and right retractable footboards are, for example, each configured to satisfy at least one of (i) to (iv) below, either in the retracted state or in the unretracted in-use state.
(i) **In** a vehicle side view, the retractable footboard is at least partially or entirely positioned forward of the forward end of the main rider seat, an output shaft disposed in a power source of the straddled vehicle, or the rear end of a fuel tank or a tank cover.
   The power source may be an engine, an electric motor, or both of them, for example. The engine is configured to generate power through combustion of a mixed gas and output the power via a crankshaft. **In** a case of the power source being an engine, its crankshaft corresponds to the output shaft mentioned above. In a case of the power source being an electric motor, its rotor output shaft corresponds to the output shaft mentioned above.
   The fuel tank is configured to store a fuel that is to be supplied to an engine serving as the power source of the straddled vehicle. The tank cover, which has an appearance like a fuel tank, is provided instead of the fuel tank. For example, in a case of the power source of the straddled vehicle being an electric motor, the straddled vehicle has the tank cover.
(ii) The forward end of the retractable footboard is positioned rearward of the rear end of a front wheel or a front fender in a vehicle side view.
   The front fender is configured to cover at least a part of the front wheel in a vehicle plan view, for example.
(iii) The retractable footboard is at least partially or entirely positioned forward or rearward of the forward end of a fuel tank or a tank cover in a vehicle side view.
(iv) **In** a vehicle side view, the retractable footboard is at least partially positioned forward or rearward of a handlebar in a handle neutral position.

As for the position in the up-down direction of the vehicle, the pair of left and right retractable footboards are, for example, each configured to satisfy at least one of (i) to (iii) below, either in the retracted state or in the unretracted in-use state.
(i) **In** a vehicle side view, the retractable footboard is at least partially or entirely positioned upward of an output shaft disposed in a power source of the straddled vehicle, the rotation center axis line of a front wheel, or a corresponding main footrest out of the pair of left and right main footrests.
   The corresponding main footrest out of the pair of left and right main footrests refers to the left main footrest corresponding to the left retractable footboard, and the right main footrest corresponding to the right retractable footboard, for example.
(ii) In a vehicle side view, the retractable footboard is positioned downward of the main rider seat, the upper end of a front wheel or a front fender, or the upper end of a power source of the straddled vehicle.
   In a case of the power source being an engine, the upper end of the power source is the upper end of a cylinder head cover, for example.
(iii) In a vehicle side view, the retractable footboard is at least partially or entirely positioned downward of a specific point on a line segment that extends in the vertical direction and that defines the shortest distance from the main rider seat to a corresponding main footrest out of the pair of left and right main footrests.
One end of the line segment is a point at which a vertical line intersects the upper end of the corresponding main footrest out of the pair of left and right main footrests in a vehicle side view, for example. The other end of the line segment is a point at which the vertical line intersects the lower end of the main rider seat in a vehicle side view, for example. The vertical line passes through the center of the outer shape of the corresponding main footrest out of the pair of left and right main footrests in a vehicle side view, for example. The specific point is the midpoint of the line segment, for example. The specific point is a point that defines the upper end of a lower line segment, provided that the line segment is divided into three equal segments, namely, an upper line segment, a middle line segment, and the lower line segment, for example.

As for the position in the vehicle width direction, the pair of left and right retractable footboards are, for example, each configured to satisfy at least one of (i) to (iv) below, either in the retracted state or in the unretracted in-use state.
(i) **In** a vehicle front view, the retractable footboard is at least partially or entirely positioned outward in the vehicle width direction relative to the main rider seat, a power source of the straddled vehicle, a vehicle body frame, a front fork, a handlebar in a handle neutral position, or a fuel tank or a tank cover of the straddled vehicle.
   The front fork is configured to rotatably support the front wheel of the straddled vehicle, for example.
(ii) In a vehicle front view, the retractable footboard is at least partially or entirely positioned inward in the vehicle width direction relative to the outer end in the vehicle width direction of a handlebar in a handle neutral position.
(iii) In a vehicle front view, the retractable footboard is at least partially positioned outward or inward in the vehicle width direction relative to the outer end in the vehicle width direction of a corresponding main footrest out of the pair of left and right main footrests.
(iv) In a vehicle front view, the retractable footboard at least partially or entirely overlaps a corresponding main footrest out of the pair of left and right main footrests.

The pair of left and right retractable footboards may each be configured such that, when it is in the retracted state, the main rider foot placement surface is visible in a vehicle plan view but does not allow a foot to be placed on the main rider foot placement surface, for example. In such a configuration, it is simply required that the main rider foot placement surface in a vehicle plan view in the retracted state be smaller than the main rider foot placement surface in a vehicle plan view in the unretracted in-use state.

The configuration in which the main rider foot placement surface in a vehicle plan view is less visible in the retracted state than in the unretracted in-use state encompasses not only a configuration in which the retractable footboard is positioned at a vehicle lateral side in the unretracted in-use state but is not positioned at the vehicle lateral side in the retracted state, but also a configuration in which although the retractable footboard is positioned at a vehicle lateral side both in the unretracted in-use state and in the retracted state, its main rider foot placement surface in a vehicle plan view is smaller in the retracted state than in the unretracted in-use state, for example. The configuration in which the main rider foot placement surface in a vehicle plan view is smaller in the retracted state than in the unretracted in-use state encompasses a configuration in which a projected area of the main rider foot placement surface in the retracted state projected in the vertical direction is smaller than a projected area of the main rider foot placement surface in the unretracted in-use state projected in the vertical direction, for example.

The pair of left and right retractable footboards are each configured to be positioned at a vehicle lateral side when in the retracted state, for example. The pair of left and right retractable footboards are each configured to be positioned outward in the vehicle width direction relative to the vehicle body frame when in the retracted state, for example. The pair of left and right retractable footboards are each configured to be visible in a vehicle side view when in the retracted state, for example. The pair of left and right retractable footboards are each configured to be at least partially positioned forward of a down frame portion of the vehicle body frame when in the retracted state, the down frame portion extending rearward and downward of the vehicle from a head pipe, for example. The pair of left and right retractable footboards are each configured to be at least partially positioned inward in the vehicle width direction relative to the down frame portion of the vehicle body frame when in the retracted state, the down frame portion extending rearward and downward of the vehicle from the head pipe, for example.

**It** is simply required that the pair of left and right retractable footboards be each configured such that the main rider foot placement surface in a vehicle plan view in the unretracted in-use state is larger than the main rider foot placement surface in a vehicle plan view in the retracted state. The configuration in which the main rider foot placement surface in the unretracted in-use state is visible in a vehicle plan view encompasses a configuration in which the main rider foot placement surface in the unretracted in-use state in a vehicle plan view is larger than the main rider foot placement surface in the retracted state in a vehicle plan view. The configuration in which the main rider foot placement surface in the unretracted in-use state is visible in a vehicle plan view encompasses a configuration in which, in the unretracted in-use state, the retractable footboard is positioned at a vehicle lateral side so that the main rider foot placement surface is visible in a vehicle plan view, for example. The configuration in which the main rider foot placement surface in a vehicle plan view is larger in the unretracted in-use state than in the retracted state encompasses a configuration in which a projected area of the main rider foot placement surface in the unretracted in-use state projected in the vertical direction is larger than a projected area of the main rider foot placement surface in the retracted state projected in the vertical direction, for example.

The pair of left and right retractable footboards are each configured to be positioned at a vehicle lateral side when in the unretracted in-use state, for example. The pair of left and right retractable footboards are each configured to be positioned outward in the vehicle width direction relative to the vehicle body frame when in the unretracted in-use state, for example. The pair of left and right retractable footboards are each configured to be visible in a vehicle side view at least when in the unretracted in-use state, for example.

The two stable stationary states that the pair of left and right retractable footboards can each take are the retracted state and the unretracted in-use state. The main rider who is driving the straddled vehicle can change the foot placement position depending on traveling situations. In some traveling situation, the main rider who is driving the straddled vehicle may not place his/her feet on the pair of left and right retractable footboards.

The pair of left and right retractable footboards are each configured to allow the main rider to manipulate the retractable footboard with his/her foot while sitting on the main rider seat, for shifting from the retracted state to the unretracted in-use state, and/or for shifting from the unretracted in-use state to the retracted state, for example. **In** such a configuration, the pair of left and right retractable footboards are each configured to have a state shifting operating surface or a state shifting operating section that the main rider manipulates with his/her foot while sitting on the main rider seat, for example.

The pair of left and right retractable footboards may each be configured to use power of an actuator for shifting from the retracted state to the unretracted in-use state, and/or for shifting from the unretracted in-use state to the retracted state. The actuator is, for example, an electric motor. The actuator is, for example, driven in response to a manipulation on an operation switch disposed on the handlebar.

Being able to maintain two stable stationary states means being able to continue in the same state unless a state shifting operation force for shifting from one state to the other state acts, for example. **It** may be acceptable that a biasing force of bias means such as a spring is used to maintain the two stable stationary states, for example.

Being retractable is different from being a fold-down type, which returns to the original position when an external force no longer acts thereon, or which temporarily changes its state due to an external force acting thereon. Being retractable means being capable of taking two stable stationary states, while being a fold-down type means being capable of only one stable stationary state.

The pair of left and right retractable footboards are each configured to rotate about a predetermined rotation center axis line when shifting from one to the other of the retracted state and the unretracted in-use state, for example. The configuration in which the retractable footboard rotates the rotation center axis line encompasses a configuration in which the retractable footboard rotates so that it can move to and fro between the retracted state and the unretracted in-use state, for example. The retractable footboard is simply required to be capable of moving to and fro between the retracted state and the unretracted in-use state, and is not necessary required to be capable of rotating through the entire circumference of the rotation center axis line.

The pair of left and right retractable footboards may each be configured to move, or expand and contract, in the vehicle width direction when shifting from one to the other of the retracted state and the unretracted in-use state.

The main rider foot placement surface may be horizontal, or may be inclined relative to a horizontal plane, while the retractable footboard is in the unretracted in-use state, for example. The configuration in which the main rider foot placement surface is inclined relative to the horizontal plane encompasses a configuration in which the forward end of the main rider foot placement surface is positioned upward of the rear end of the main rider foot placement surface so that the main rider foot placement surface is inclined forward of the vehicle, for example.

The main rider foot placement surface is disposed on a first end surface of the retractable footboard in its thickness direction, for example. The main rider foot placement surface may be formed on a sheet-like member disposed on the first end surface of the retractable footboard in the thickness direction, for example. The sheet-like member is made of an elastic material such as rubber, for example.

Alternatively, suppose a case where the pair of left and right retractable footboards are each configured such that while the retractable footboard is in the retracted state, the retractable footboard is positioned at a vehicle lateral side, and has an outer side surface in the vehicle width direction and an inner side surface in the vehicle width direction. In this case, the main rider foot placement surface is disposed on the inner side surface in the vehicle width direction. The configuration in which the main rider foot placement surface is disposed on the inner side surface in the vehicle width direction encompasses a configuration in which the main rider foot placement surface is formed on a sheet-like member disposed on the inner side surface in the vehicle width direction, for example.

In an aspect of the present teaching, the straddled vehicle may adopt the following configuration.

(2) In the straddled vehicle according to (1),
the pair of left and right retractable footboards are each positioned at a vehicle lateral side at least when in the unretracted in-use state.

The straddled vehicle of (2) allows the main rider who is driving the straddled vehicle to easily place his/her foot on the main rider foot placement surface while sitting on the main rider seat.

The configuration in which the pair of left and right retractable footboards are each positioned at a vehicle lateral side encompasses a configuration in which the pair of left and right retractable footboards are each positioned outward in the vehicle width direction relative to the vehicle body frame, and a configuration in which the pair of left and right retractable footboards are each visible in a vehicle side view, for example.

In an aspect of the present teaching, the straddled vehicle may adopt the following configuration.

(3) In the straddled vehicle according to (1) or (2),
the pair of left and right retractable footboards are each positioned at a vehicle lateral side both in the unretracted in-use state and in the retracted state.

The straddled vehicle of (3) can shorten a movement distance or a movement time necessary for the retractable footboard to shift its state between the retracted state and the unretracted in-use state, and also allows the main rider who is driving the straddled vehicle to easily place his/her foot on the main rider foot placement surface while sitting on the main rider seat.

In an aspect of the present teaching, the straddled vehicle may adopt the following configuration.

(4) In the straddled vehicle according to any of (1) to (3),
the pair of left and right retractable footboards are each configured such that
in the unretracted in-use state, the main rider foot placement surface faces upward of the vehicle, and
in the retracted state, the main rider foot placement surface faces inward of the vehicle.

In the straddled vehicle of (4), the retractable footboard in the retracted state can be brought into the unretracted in-use state if the retractable footboard is fallen down outward in the vehicle width direction, for example. **It** is possible to shorten a movement distance or a movement time necessary for the retractable footboard to shift its state between the retracted state and the unretracted in-use state, and also allow the main rider who is driving the straddled vehicle to easily place his/her foot on the main rider foot placement surface while sitting on the main rider seat.

The configuration in which the main rider foot placement surface faces upward of the vehicle encompasses not only a configuration in which the main rider foot placement surface faces directly upward of the vehicle but also a configuration in which the main rider foot placement surface faces upward and rearward of the vehicle. The configuration in which the main rider foot placement surface faces directly upward of the vehicle refers to a configuration in which the main rider foot placement surface is horizontal, for example. The configuration in which the main rider foot placement surface faces upward and rearward of the vehicle refers to a configuration in which the main rider foot placement surface is inclined forward of the vehicle with the forward end thereof positioned upward of the rear end thereof, for example. For example, a configuration in which the angle of inclination of the main rider foot placement surface relative to a horizontal plane is less than 45 degrees corresponds to the configuration in which the main rider foot placement surface faces upward of the vehicle.

The configuration in which the main rider foot placement surface faces inward in the vehicle width direction encompasses not only a configuration in which the main rider foot placement surface faces directly sideways but also a configuration in which the main rider foot placement surface faces upward of the vehicle while facing inward in the vehicle width direction. The configuration in which the main rider foot placement surface faces directly sideways refers to a configuration in which the main rider foot placement surface is vertical. The configuration in which the main rider foot placement surface faces upward of the vehicle while facing inward in the vehicle width direction refers to a configuration in which the main rider foot placement surface is inclined with the upper end thereof positioned outward in the vehicle width direction relative to the lower end thereof, for example. For example, a configuration in which the angle of inclination of the main rider foot placement surface relative to a horizontal plane is more than 45 degrees corresponds to the configuration in which the main rider foot placement surface faces inward in the vehicle width direction.

The pair of left and right retractable footboards each have an outer side surface in the vehicle width direction, the outer side surface being positioned outward in the vehicle width direction relative to the main rider foot placement surface when the retractable footboard is in the retracted state, for example. An airflow regulation effect, which will be described later, may be exerted by appropriately designing the shape, etc., of the outer side surface in the vehicle width direction, for example.

In an aspect of the present teaching, the straddled vehicle may adopt the following configuration.

(5) In the straddled vehicle according to any of (1) to (4),
the pair of left and right retractable footboards each include
   a footboard main body having, on a first end surface in thickness direction, the main rider foot placement surface, and
   a chevron-shaped protrusion disposed so as to protrude outward in vehicle width direction from an outer side surface in the vehicle width direction, the outer side surface being formed by a second end surface of the footboard main body in the thickness direction in the retracted state,
the chevron-shaped protrusion includes
   a ridgeline portion extending in up-down direction of the vehicle in the retracted state, and
   a forward slope formed so as to, in the retracted state, extend in a direction in which the ridgeline portion extends in a vehicle side view, and in a direction that is perpendicular to the direction in which the ridgeline portion extends in a vehicle side view, the forward slope being configured such that its height from the second end surface in the thickness direction is higher at the rear end than at the forward end in the direction that is perpendicular to the direction in which the ridgeline portion extends in a vehicle side view, and such that the rear end in the direction that is perpendicular to the direction in which the ridgeline portion extends in a vehicle side view is connected to the forward end of the ridgeline portion.

In the straddled vehicle of (5), the chevron-shaped protrusion (more specifically, the forward slope of the chevron-shaped protrusion) can be used to obtain the airflow regulation effect (e.g., an effect of suppressing a relative wind hitting the under-knee of the leg of the main rider who is driving the straddled vehicle) when the retractable footboard is in the retracted state, and to suppress a splash of water or mud hitting the main rider while the vehicle is traveling when the retractable footboard is in the unretracted in-use state.

Here, the under-knee of the leg of the main rider is simply required to be a portion under the knee of the leg of the main rider, and may include the shin of the leg of the main rider, for example.

The footboard main body includes the first end surface in the thickness direction, and the second end surface in the thickness direction. With respect to the thickness direction of the footboard main body, the second end surface in the thickness direction is the side surface opposite to the first end surface in the thickness direction.

Having, on the first end surface in the thickness direction, the main rider foot placement surface encompasses not only a configuration in which the first end surface in the thickness direction includes the main rider foot placement surface but also a configuration in which a sheet-like member disposed on the first end surface in the thickness direction includes the main rider foot placement surface. The configuration in which the sheet-like member includes the main rider foot placement surface encompasses a configuration in which the main rider foot placement surface is formed on the sheet-like member, for example.

The chevron-shaped protrusion is simply required to be formed integrally with the footboard main body. The chevron-shaped protrusion may be integrally formed on the footboard main body, or may be formed by a member different from the footboard main body, for example.

Supposed a case where the second end surface of the footboard main body in the thickness direction, which serves as the outer side surface in the vehicle width direction when the retractable footboard is in the retracted state, is divided in the forward-rearward direction of the vehicle into two equal parts, namely, a forward half and a rear half, for example. In such a case, the chevron-shaped protrusion is provided in the rear half.

The configuration in which the ridgeline portion extends in the up-down direction of the vehicle encompasses not only a configuration in which the ridgeline portion extends in the vertical direction but also a direction in which the ridgeline portion extends in a direction that is angled with respect to the vertical direction, for example. If a straight line extending in this angled direction forms an angle of less than 45 degrees with respect to a straight line extending in the vertical direction, such a configuration is encompassed by the configuration in which the ridgeline portion extends in the up-down direction of the vehicle.

The forward slope is configured such that, when the retractable footboard is in the retracted state, the forward end of the forward slope is connected to the second end surface of the footboard main body in the thickness direction (that is, to the outer side surface in the vehicle width direction), and the rear end of the forward slope is connected to the forward end of the ridgeline portion, with respect to the direction that is perpendicular to the direction in which the ridgeline portion extends, for example. Thus, the height of the forward slope from the second end surface of the footboard main body in the thickness direction (that is, the outer side surface in the vehicle width direction when the retractable footboard is in the retracted state) is higher at the rear end than at the forward end. The forward end of the forward slope is, for example, one of end edges positioned forward of the vehicle in the direction that is perpendicular to the direction in which the ridgeline portion extends. The rear end of the forward slope is, for example, one of end edges positioned rearward of the vehicle in the direction that is perpendicular to the direction in which the ridgeline portion extends.

The chevron-shaped protrusion is provided so as to constitute a part of the retractable footboard, and is configured to regulate an airflow of the relative wind when the retractable footboard is in the retracted state, for example.

Regulating an airflow of the relative wind encompasses a configuration in which the chevron-shaped protrusion (more specifically, the forward slope of the chevron-shaped protrusion) causes a relative wind that flows from the forward of the vehicle to the rear of the vehicle along the second end surface of the footboard main body in the thickness direction (i.e., along the outer side surface in the vehicle width direction when the retractable footboard is in the retracted state) when the vehicle travels to flow from the inward to the outward in the vehicle width direction, for example.

Regulating an airflow of the relative wind encompasses a configuration in which the chevron-shaped protrusion (more specifically, the forward slope of the chevron-shaped protrusion) causes a relative wind that flows from the forward of the vehicle to the rear of the vehicle along the second end surface of the footboard main body in the thickness direction (i.e., along the outer side surface in the vehicle width direction when the retractable footboard is in the retracted state) when the vehicle travels to flow from the inward to the outward in the vehicle width direction, for suppression of the relative wind hitting the under-knee of the leg of the main rider who is driving the straddled vehicle, for example. To suppress the relative wind hitting the under-knee of the leg of the main rider who is driving the straddled vehicle, for example, the relative positional relationship between the retractable footboard in the retracted state and the main footrest, the position, shape, size, etc., of the chevron-shaped protrusion, and the like, are designed as appropriate.

The pair of left and right retractable footboards are each configured such that the chevron-shaped protrusion, which is disposed so as to protrude outward in the vehicle width direction from the outer side surface in the vehicle width direction in the retracted state, suppresses a relative wind hitting the under-knee of the leg of the main rider who is driving the straddled vehicle when the vehicle travels.

As for the position of the chevron-shaped protrusion, the pair of left and right retractable footboards are, for example, each configured to satisfy at least one of (i) to (vi) below, in the retracted state.
(i) **In** a vehicle side view, the chevron-shaped protrusion is at least partially or entirely positioned upward of an output shaft disposed in a power source of the straddled vehicle, the rotation center axis line of a front wheel, the lower end of the footboard main body, or a corresponding main footrest out of the pair of left and right main footrests.
   The lower end of the footboard main body refers to the lowest position in the footboard main body in a vehicle side view.
(ii) In a vehicle side view, the chevron-shaped protrusion is at least partially or entirely positioned downward of the main rider seat, the upper end of a front wheel or a front fender, the upper end of the footboard main body, an output shaft disposed in a power source of the straddled vehicle, or the upper end of the power source of the straddled vehicle.
   The upper end of the footboard main body refers to the highest position in the footboard main body in a vehicle side view.
(iii) In a vehicle side view, the chevron-shaped protrusion is at least partially or entirely positioned downward of a specific point on a line segment that extends in the vertical direction and that defines the shortest distance from the main rider seat to a corresponding main footrest out of the pair of left and right main footrests.
(iv) In a vehicle side view, the chevron-shaped protrusion is positioned forward of the under-knee of the leg of the main rider who is placing his/her foot on each of the pair of left and right main footrests while sitting on the main rider seat.
(v) In a vehicle front view, the chevron-shaped protrusion at least partially or entirely overlaps the under-knee of the leg of the main rider who is placing his/her foot on each of the pair of left and right main footrests while sitting on the main rider seat.
(vi) In a vehicle front view, the under-knee of the leg of the main rider who is placing his/her foot on each of the pair of left and right main footrests while sitting on the main rider seat is at least partially positioned outward of the chevron-shaped protrusion in the vehicle width direction.

In an aspect of the present teaching, the straddled vehicle may adopt the following configuration.

(6) In the straddled vehicle according to (5),
in each of the pair of left and right retractable footboards,
the chevron-shaped protrusion further includes a rear end surface, the forward end of which is connected to the rear end of the ridgeline portion in the retracted state, and
the chevron-shaped protrusion is configured such that, in the retracted state, a length of the forward slope in the direction that is perpendicular to the direction in which the ridgeline portion extends is, in a vehicle side view, longer than a length of the rear end surface in the direction that is perpendicular to the direction in which the ridgeline portion extends.

In the straddled vehicle of (6), the rear end surface extends in the up-down direction of the vehicle and in the vehicle width direction, when the retractable footboard is in the retracted state. For shifting the retractable footboard from the retracted state to the unretracted in-use state, the rear end surface can be used as a state shifting operating surface through which the main rider manipulates the retractable footboard with his/her foot. **It** is easy for the main rider to manipulate the retractable footboard with his/her foot, for shifting the retractable footboard from the retracted state to the unretracted in-use state. The ease of manipulation in shifting the retractable footboard from the retracted state to the unretracted in-use state can be improved.

In addition, the chevron-shaped protrusion including the rear end surface, which can be used as the state shifting operating surface as mentioned above, has the forward slope. The straddled vehicle of (6) is capable of obtaining the airflow regulation effect, while improving the ease of manipulation of the retractable footboard in shifting the retractable footboard from the retracted state to the unretracted in-use state.

When the retractable footboard is in the retracted state, for example, the rear end surface has its forward end connected to the rear end of the ridgeline portion, and its rear end connected to the footboard main body, with respect to the direction that is perpendicular to the direction in which the ridgeline portion extends. The forward end of the rear end surface is, for example, one of end edges positioned forward of the vehicle in the direction that is perpendicular to the direction in which the ridgeline portion extends. The rear end of the rear end surface is, for example, one of end edges positioned rearward of the vehicle in the direction that is perpendicular to the direction in which the ridgeline portion extends.

The configuration in which the length of the forward slope in the direction that is perpendicular to the direction in which the ridgeline portion extends is, in a vehicle side view, longer than the length of the rear end surface in the direction that is perpendicular to the direction in which the ridgeline portion extends encompasses a configuration in which the angle of inclination of the forward slope relative to the second end surface of the footboard main body in the thickness direction (relative to the outer side surface in the vehicle width direction when the retractable footboard is in the retracted state) is less than the angle of inclination of the rear end surface relative to the second end surface in the thickness direction, for example. The configuration in which the length of the forward slope in the direction that is perpendicular to the direction in which the ridgeline portion extends is, in a vehicle side view, longer than the length of the rear end surface in the direction that is perpendicular to the direction in which the ridgeline portion extends encompasses a configuration in which the forward slope is visible but the rear end surface is invisible in a vehicle side view, for example.

**In** an aspect of the present teaching, the straddled vehicle may adopt the following configuration.

(7) In the straddled vehicle according to (5) or (6),
in each of the pair of left and right retractable footboards,
the footboard main body further includes a side surface that connects the first end surface in the thickness direction to the second end surface in the thickness direction,
the chevron-shaped protrusion further includes a rear end surface, the forward end of which is connected to the rear end of the ridgeline portion in the retracted state, and
the chevron-shaped protrusion is configured such that, in the retracted state, the rear end surface is connected to at least a part of the side surface of the footboard main body without interposition of the second end surface in the thickness direction.

In the straddled vehicle of (7), the rear end surface of the chevron-shaped protrusion can be used to partially enlarge the side surface of the footboard main body. For shifting the retractable footboard from the retracted state to the unretracted in-use state, the side surface of the footboard main body, which is partially enlarged as mentioned above, can be used as a state shifting operating surface through which the main rider manipulates the retractable footboard with his/her foot. **It** is easy for the main rider to manipulate the retractable footboard with his/her foot, for shifting the retractable footboard from the retracted state to the unretracted in-use state. The ease of manipulation in shifting the retractable footboard from the retracted state to the unretracted in-use state can be improved.

In addition, the chevron-shaped protrusion including the rear end surface, which contributes to the partial enlargement of the side surface of the footboard main body, has the forward slope. The straddled vehicle of (7) is capable of obtaining the airflow regulation effect, while improving the ease of manipulation of the retractable footboard in shifting the retractable footboard from the retracted state to the unretracted in-use state.

Connecting the first end surface in the thickness direction to the second end surface in the thickness direction encompasses connecting a peripheral edge of the first end surface in the thickness direction to a peripheral edge of the second end surface in the thickness direction, for example. Connecting the first end surface in the thickness direction to the second end surface in the thickness direction encompasses connecting the first end surface in the thickness direction to the second end surface in the thickness direction through their entire peripheries, for example.

The configuration in which the rear end surface is connected to at least a part of the side surface of the footboard main body without interposition of the second end surface in the thickness direction encompasses a configuration in which the rear end surface is directly connected to at least a part of the side surface of the footboard main body, a configuration in which the rear end surface is smoothly connected to at least a part of the side surface of the footboard main body, and a configuration in which the rear end surface is flush with at least a part of the side surface of the footboard main body, for example.

In an aspect of the present teaching, the straddled vehicle may adopt the following configuration.

(8) In the straddled vehicle according to (6) or (7),
the pair of left and right retractable footboards are each configured such that, in the retracted state, the rear end surface of the chevron-shaped protrusion is inclined forward of the vehicle in a vehicle side view so that the upper end of the rear end surface is positioned forward of the lower end of the rear end surface.

In the straddled vehicle of (8), the rear end surface of the chevron-shaped protrusion, which can be used as the state shifting operating surface through which the main rider manipulates the retractable footboard with his/her foot for shifting the retractable footboard from the retracted state to the unretracted in-use state, is able to be inclined forward of the vehicle in a vehicle side view. **It** is easy for the main rider to manipulate the retractable footboard with his/her foot, for shifting the retractable footboard from the retracted state to the unretracted in-use state. The ease of manipulation in shifting the retractable footboard from the retracted state to the unretracted in-use state can be improved.

In addition, the chevron-shaped protrusion including the rear end surface, which can be used as the state shifting operating surface as mentioned above, has the forward slope. The straddled vehicle of (8) is capable of obtaining the airflow regulation effect, while improving the ease of manipulation of the retractable footboard in shifting the retractable footboard from the retracted state to the unretracted in-use state.

In an aspect of the present teaching, the straddled vehicle may adopt the following configuration.

(9) In the straddled vehicle according to any of (6) to (8),
the pair of left and right retractable footboards are each configured to be capable of taking the retracted state and the unretracted in-use state by the footboard main body rotating about a rotation center axis line that extends in forward-rearward direction of the vehicle, and
the chevron-shaped protrusion is configured such that, in the retracted state, the rear end surface extends in a direction that is angled with respect to the rotation center axis line in a vehicle side view, and/or the rear end surface is positioned upward of the rotation center axis line in a vehicle side view.

In the straddled vehicle of (9), the rear end surface of the chevron-shaped protrusion, which can be used as the state shifting operating surface through which the main rider manipulates the retractable footboard with his/her foot for shifting the retractable footboard from the retracted state to the unretracted in-use state, is able to be angled with respect to the rotation center axis line of the footboard main body in a vehicle side view. Alternatively, the rear end surface of the chevron-shaped protrusion is able to be positioned upward of the rotation center axis line of the footboard main body in a vehicle side view. When the main rider manipulates the rear end surface of the chevron-shaped protrusion serving as the state shifting operating surface with his/her foot in order to shift the retractable footboard from the retracted state to the unretracted in-use state, the retractable footboard is easily rotated about the rotation center axis line of the footboard main body. The ease of manipulation in shifting the retractable footboard from the retracted state to the unretracted in-use state can be improved.

In addition, the chevron-shaped protrusion including the rear end surface, which can be used as the state shifting operating surface as mentioned above, has the forward slope. The straddled vehicle of (9) is capable of obtaining the airflow regulation effect, while improving the ease of manipulation of the retractable footboard in shifting the retractable footboard from the retracted state to the unretracted in-use state.

The configuration in which the rotation center axis line of the footboard main body extends in the forward-rearward direction of the vehicle encompasses a configuration in which the rotation center axis line of the footboard main body extends in a direction that is angled with respect to the forward-rearward direction of the vehicle, for example. For example, if the angle between the rotation center axis line of the footboard main body and a straight line extending in the horizontal direction is less than 45 degrees in a vehicle side view, such a configuration is encompassed by the configuration in which the rotation center axis line of the footboard main body extends in the forward-rearward direction of the vehicle.

In an aspect of the present teaching, the straddled vehicle may adopt the following configuration.

(10) In the straddled vehicle according to any of (6) to (9),
in each of the pair of left and right retractable footboards, the chevron-shaped protrusion is configured such that the rear end surface is recessed toward the forward of the vehicle.

In the straddled vehicle of (10), the rear end surface of the chevron-shaped protrusion, which can be used as the state shifting operating surface through which the main rider manipulates the retractable footboard with his/her foot for shifting the retractable footboard from the retracted state to the unretracted in-use state, is able to be recessed toward the forward of the vehicle. **It** is easy for the main rider to manipulate the retractable footboard with his/her foot, for shifting the retractable footboard from the retracted state to the unretracted in-use state. The ease of manipulation in shifting the retractable footboard from the retracted state to the unretracted in-use state can be improved.

In addition, the chevron-shaped protrusion including the rear end surface, which can be used as the state shifting operating surface as mentioned above, has the forward slope. The straddled vehicle of (10) is capable of obtaining the airflow regulation effect, while improving the ease of manipulation of the retractable footboard in shifting the retractable footboard from the retracted state to the unretracted in-use state.

The rear end surface being recessed toward the forward of the vehicle encompasses the rear end surface being a concave curved surface that is recessed toward the forward of the vehicle, for example. The concave curved surface is, for example, recessed toward the forward of the vehicle such that its center with respect to the vehicle width direction is positioned farthest forward of the vehicle when the retractable footboard is in the retracted state.

In an aspect of the present teaching, the straddled vehicle may adopt the following configuration.

(11) In the straddled vehicle according to any of (1) to (10),
in each of the pair of left and right retractable footboards, the main rider foot placement surface is configured to, in a vehicle side view, be at least partially positioned upward of a corresponding main footrest out of the pair of left and right main footrests, and/or be positioned downward of the main rider seat.

The straddled vehicle of (11) allows the main rider who is driving the straddled vehicle to easily place his/her foot on the main rider foot placement surface while sitting on the main rider seat.

In addition, providing the configuration of the straddled vehicle of (5) makes it possible to, while the retractable footboard is in the retracted state, suppress a relative wind hitting the under-knee of the leg of the main rider who is driving the straddled vehicle when the vehicle travels, and while the retractable footboard is in the unretracted in-use state, suppress a splash of water or mud hitting the main rider when the vehicle travels.

In an aspect of the present teaching, the straddled vehicle may adopt the following configuration.

(12) In the straddled vehicle according to any of (1) to (11),
the pair of left and right retractable footboards are each configured such that its length in the vehicle width direction in the unretracted in-use state is longer than its length in the vehicle width direction in the retracted state.

The straddled vehicle of (12) allows the main rider to easily place his/her foot on the main rider foot placement surface in the unretracted in-use state, and can improve the visibility of the main rider's foot and therearound in the retracted state.

In addition, if the configuration of the straddled vehicle of (5) is provided; when the retractable footboard is in the retracted state, a range where the airflow regulation effect is obtained can be expanded in the up-down direction of the vehicle. The airflow regulation effect is obtained over a wider range in the up-down direction of the vehicle. When the retractable footboard is in the unretracted in-use state, a range where the effect of suppressing a splash of water or mud hitting the main rider when the vehicle travels is obtained can be expanded in the vehicle width direction. The effect is obtained by over a wider range in the vehicle width direction.

The length of the retractable footboard in the vehicle width direction in the unretracted in-use state is, for example, the maximum length of the retractable footboard in the vehicle width direction when in the unretracted in-use state. The length of the retractable footboard in the vehicle width direction in the retracted state is, for example, the maximum length of the retractable footboard in the vehicle width direction when in the retracted state.

These and other objects, features, aspects, and advantages of the present teaching will become more apparent from the following detailed description of embodiment(s) of the present teaching, with reference to the accompanying drawings. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by the drawings or descriptions provided below.

### Advantageous Effects of Invention

The present teaching can: improve the degree of freedom of a foot placement position at which a main rider places his/her foot while driving a straddled vehicle; improve the footing of the main rider; and improve the visibility of the main rider's foot and therearound.

### Brief Description of Drawings

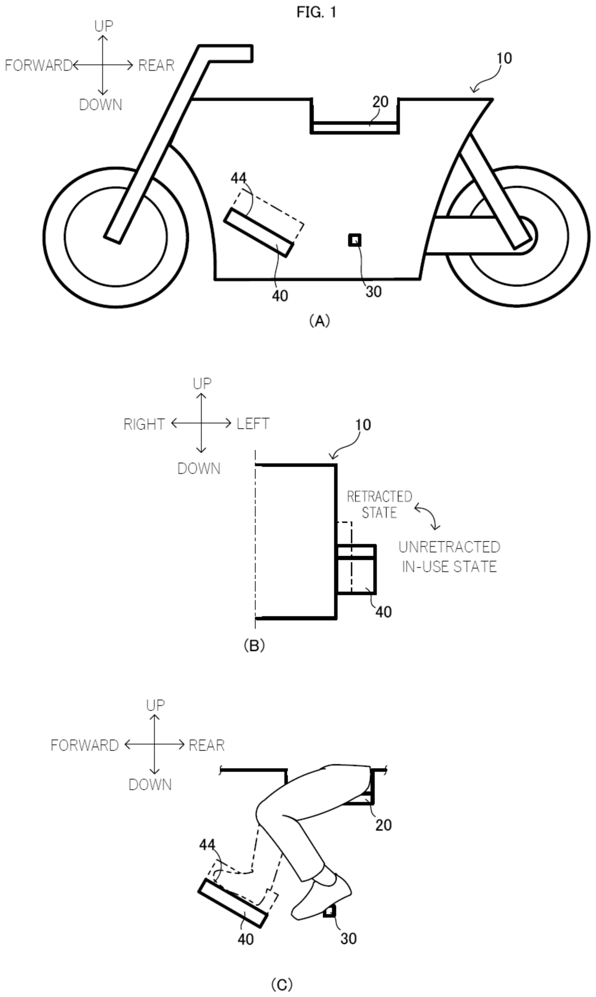

[FIG. 1] An illustrative diagram showing a straddled vehicle according to an embodiment of the present teaching, including: (A) a schematic diagram showing the straddled vehicle in a side view; (B) a schematic diagram showing the straddled vehicle in a front view; and (C) a schematic diagram showing a state where a main rider who is driving the straddled vehicle places his/her foot on a main footrest and a state where the main rider places his/her foot on a retractable footboard

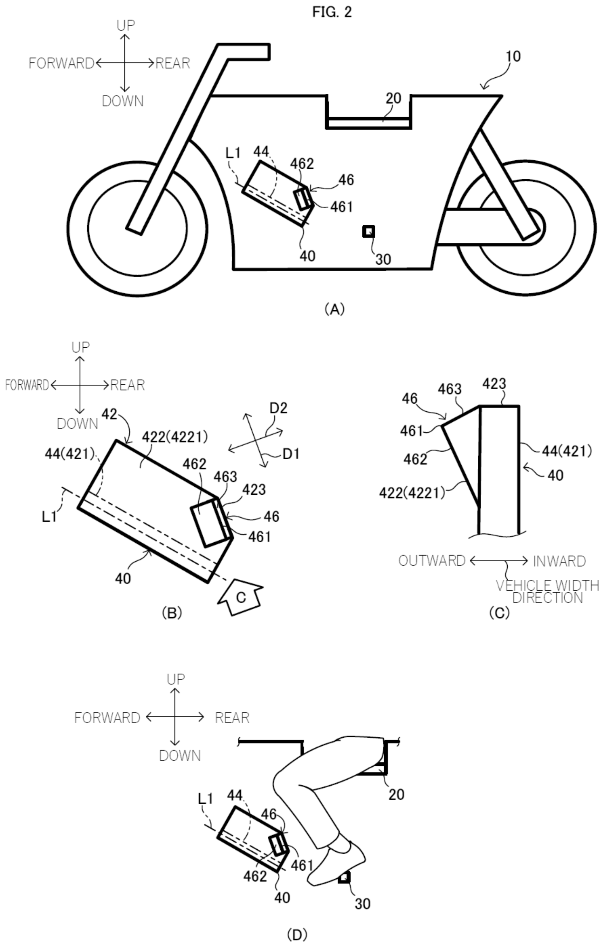

[FIG. 2] An illustrative diagram showing another exemplary variation of the straddled vehicle according to the embodiment of the present teaching, including: (A) a schematic diagram showing the straddled vehicle in a side view; (B) a schematic diagram showing a retractable footboard in a side view; (C) a schematic diagram showing a chevron-shaped protrusion as viewed in the direction indicated by the arrow C; and (D) a schematic diagram showing a state where a main rider who is driving the straddled vehicle places his/her foot on a main footrest

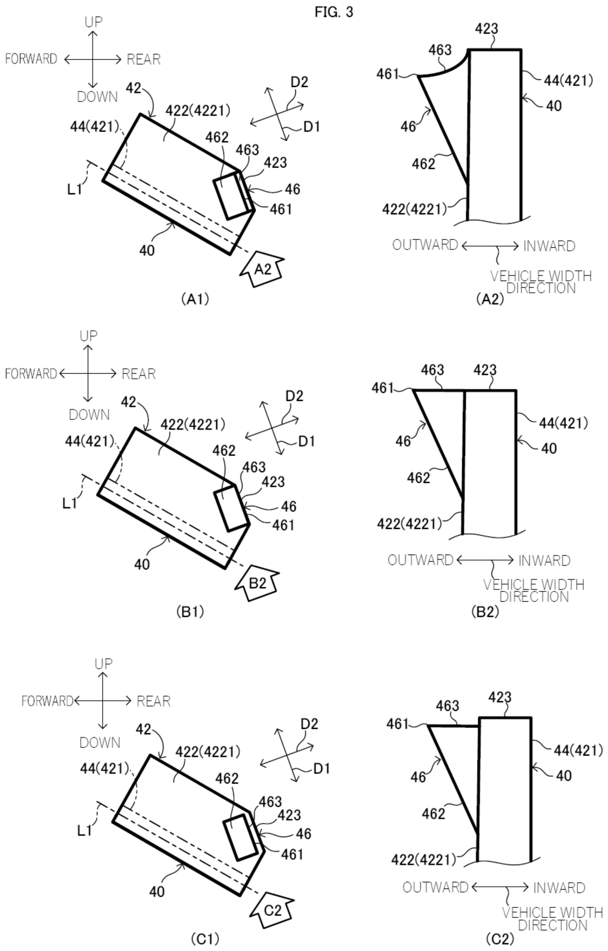

[FIG. 3] An illustrative diagram showing another exemplary variation of the straddled vehicle according to the embodiment of the present teaching, including: (A1) (A2) schematic diagrams showing a case where a rear end surface of a chevron-shaped protrusion is recessed toward the forward of the vehicle; (B1) (B2) schematic diagrams showing a case where a rear end surface of a chevron-shaped protrusion is formed flush with a side surface of a footboard main body; and (C1) (C2) schematic diagrams showing a case where a rear end surface of a chevron-shaped protrusion is connected to a second end surface of a footboard main body in its thickness direction.

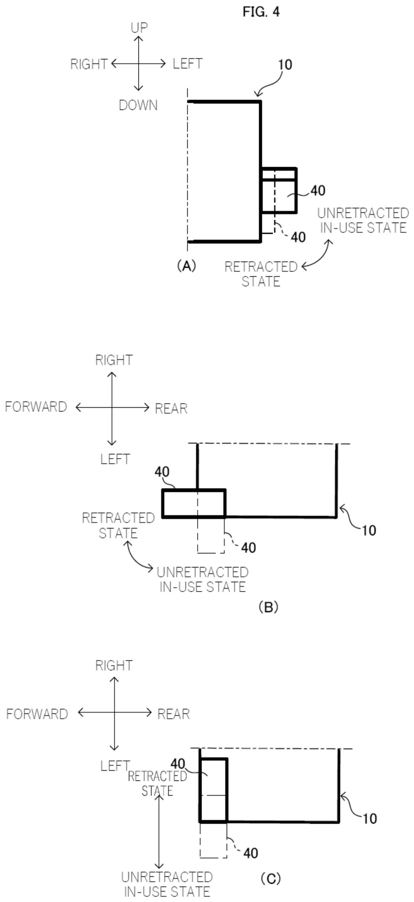

[FIG. 4] An illustrative diagram showing an exemplary variation of operations of pair of left and right retractable footboards included in the straddled vehicle according to the embodiment of the present teaching, the illustrative diagram including: (A) a schematic diagram showing a case where the retractable footboard moves from down to up of the vehicle when shifting from a retracted state to an unretracted in-use state; (B) a schematic diagram showing a case where the retractable footboard is positioned at a vehicle lateral side in the unretracted in-use state and is at least partially positioned farther forward of the vehicle in the retracted state than in the unretracted in-use state; and (C) a schematic diagram showing a case where the retractable footboard is positioned at a vehicle lateral side in the unretracted in-use state and is at least partially positioned farther inward of the vehicle in the retracted state than in the unretracted in-use state.

### Description of Embodiments

The embodiment described below is an example to explain the present teaching.

Referring to FIG. 1, a straddled vehicle 10 according to the embodiment of the present teaching will be described. The straddled vehicle 10 includes a main rider seat 20, a pair of left and right main footrests 30, and a pair of left and right retractable footboards 40.

The main rider seat 20 is configured to have a main rider who drives the straddled vehicle 10 sit thereon while he/she is driving the straddled vehicle 10. The pair of left and right main footrests 30 are configured to allow the main rider who is driving the straddled vehicle 10 to place his/her feet thereon while sitting on the main rider seat 20.

The pair of left and right retractable footboards 40 are disposed farther forward than the pair of left and right main footrests 30. The pair of left and right retractable footboards 40 are members different from the pair of left and right main footrests 30. The pair of left and right retractable footboards 40 are configured to allow the main rider who is driving the straddled vehicle 10 to place his/her feet thereon instead of on the pair of left and right main footrests 30 while sitting on the main rider seat 20.

The pair of left and right retractable footboards 40 each include a main rider foot placement surface 44. The main rider foot placement surface 44 is configured such that the main rider who is driving the straddled vehicle 10 places his/her foot thereon while sitting on the main rider seat 20. The pair of left and right retractable footboards 40 are each configured to be able to maintain two stable stationary states. The two stable stationary states include an unretracted in-use state and a retracted state. In the unretracted in-use state, the main rider who is driving the straddled vehicle 10 is able to place his/her foot on the main rider foot placement surface 44 while sitting on the main rider seat 20. In a plan view of the straddled vehicle 10, the main rider foot placement surface 44 is visible. In the retracted state, the main rider who is driving the straddled vehicle 10 is not able to place his/her foot on the main rider foot placement surface 44 while sitting on the main rider seat 20. In the retracted state, as compared to in the unretracted in-use state, the main rider foot placement surface 44 is less visible in a plan view of the straddled vehicle 10.

In the example shown in FIG. 1, the retractable footboard 40 in the retracted state is illustrated with the imaginary line, and the retractable footboard 40 in the unretracted in-use state is illustrated with the solid line. In the example shown in FIG. 1, the retractable footboard 40 moves from up to down of the vehicle, when shifting from the retracted state to the unretracted in-use state.

The straddled vehicle 10 is capable of: improving the degree of freedom of a foot placement position at which the main rider places his/her foot while driving the straddled vehicle 10; improving the footing of the main rider; and improving the visibility of the main rider's foot and therearound.

For example, as shown in FIG. 1, the pair of left and right retractable footboards 40 may each be configured such that the main rider foot placement surface 44 faces upward of the vehicle in the unretracted in-use state, and configured such that the main rider foot placement surface 44 faces inward of the vehicle in the retracted state. In the example shown in FIG. 1, the pair of left and right retractable footboards 40 are each configured such that the main rider foot placement surface 44 faces upward and rearward of the vehicle in the unretracted in-use state. The pair of left and right retractable footboards 40 may each be positioned at a vehicle lateral side at least in the unretracted in-use state. The pair of left and right retractable footboards 40 may each be positioned at a vehicle lateral side both in the unretracted in-use state and in the retracted state. The main rider foot placement surface 44 may be configured to, in a vehicle side view, be at least partially positioned farther upward than a corresponding main footrest 30 out of the pair of left and right main footrests 30 and farther downward than the main rider seat 20. The main rider foot placement surface 44 may be configured to, in a vehicle side view, be at least partially positioned farther upward than a corresponding main footrest 30 out of the pair of left and right main footrests 30 or farther downward than the main rider seat 20. The pair of left and right retractable footboards 40 may each be configured such that its length in the vehicle width direction in the unretracted in-use state is longer than its length in the vehicle width direction in the retracted state.

For example, as shown in FIG. 2, the pair of left and right retractable footboards 40 may each include a footboard main body 42 and a chevron-shaped protrusion 46. The footboard main body 42 has, on a first end surface 421 in its thickness direction, the main rider foot placement surface 44. The chevron-shaped protrusion 46 is disposed so as to protrude outward in the vehicle width direction from an outer side surface 4221 of the footboard main body 42 in the vehicle width direction, the outer side surface 4221 being formed by a second end surface 422 of the footboard main body 42 in the thickness direction in the retracted state. The chevron-shaped protrusion 46 may include a ridgeline portion 461 and a forward slope 462. The ridgeline portion 461, in the retracted state, extends in up-down direction of the vehicle. The forward slope 462 is formed so as to, in the retracted state, extend in direction D1 and in direction D2, the direction D1 being a direction in which the ridgeline portion 461 extends in a vehicle side view, the direction D2 being a direction perpendicular to the direction D1. The height of the forward slope 462 from the second end surface 422 in the thickness direction is higher at the rear end than at the forward end in the direction D2. The rear end in the direction D2 is connected to the forward end of the ridgeline portion 461.

In the example shown in FIG. 2, the chevron-shaped protrusion 46 (more specifically, the forward slope 462 of the chevron-shaped protrusion 46) can be used to obtain an airflow regulation effect (e.g., an effect of suppressing a relative wind hitting the knee and the under-knee of the leg of the main rider who is driving the straddled vehicle 10) when the retractable footboard 40 is in the retracted state, and to suppress a splash of water or mud hitting the main rider while the vehicle is traveling when the retractable footboard 40 is in the unretracted in-use state.

For example, as shown in FIG. 2, the chevron-shaped protrusion 46 may further include a rear end surface 463. In the retracted state, the forward end of the rear end surface 463 is connected to the rear end of the ridgeline portion 461. The chevron-shaped protrusion 46 may be configured such that, in the retracted state, the length of the forward slope 462 in the direction D2 is longer than the length of the rear end surface 463 in the direction D2 in a vehicle side view. The footboard main body 42 may further include a side surface 423. The side surface 423 connects the first end surface 421 in the thickness direction to the second end surface 422 in the thickness direction. The chevron-shaped protrusion 46 may be configured such that, in the retracted state, the rear end surface 463 is connected to at least a part of the side surface 423 without interposition of the second end surface 422 in the thickness direction. The pair of left and right retractable footboards 40 may each be configured such that, in the retracted state, the rear end surface 463 is inclined forward of the vehicle in a vehicle side view so that the upper end of the rear end surface 463 is positioned farther forward of the vehicle than the lower end of the rear end surface 463. The pair of left and right retractable footboards 40 may each be configured to be capable of taking the retracted state and the unretracted in-use state by the footboard main body 42 rotating about a rotation center axis line L1, which extends in forward-rearward direction of the vehicle. The chevron-shaped protrusion 46 may be configured such that, in the retracted state, the rear end surface 463 extends in a direction that is angled with respect to the rotation center axis line L1 in a vehicle side view, and the rear end surface 463 is positioned farther upward of the vehicle than the rotation center axis line L1 in a vehicle side view. Alternatively, the chevron-shaped protrusion 46 may be configured such that, in the retracted state, the rear end surface 463 extends in a direction that is angled with respect to the rotation center axis line L1 in a vehicle side view, or the rear end surface 463 is positioned farther upward of the vehicle than the rotation center axis line L1 in a vehicle side view.

For example, as shown in (A1) and (A2) of FIG. 3, the rear end surface 463 of the chevron-shaped protrusion 46 may be recessed toward the forward of the vehicle. (A1) of FIG. 3 is a schematic diagram showing the retractable footboard 40 in a side view, and (A2) of FIG. 3 is a schematic diagram showing the chevron-shaped protrusion 46 as viewed in the direction indicated by the arrow A2 illustrated in (A1) of FIG. 3.

For example, as shown in (B1) and (B2) of FIG. 3, the rear end surface 463 of the chevron-shaped protrusion 46 may be formed flush with at least a part of the side surface 423 of the footboard main body 42. (B1) of FIG. 3 is a schematic diagram showing the retractable footboard 40 in a side view, and (B2) of FIG. 3 is a schematic diagram showing the chevron-shaped protrusion 46 as viewed in the direction indicated by the arrow B2 illustrated in (B1) of FIG. 3.

For example, as shown in (C1) and (C2) of FIG. 3, the rear end surface 463 of the chevron-shaped protrusion 46 may be connected to the second end surface 422 of the footboard main body 42 in its thickness direction (to the outer side surface 4221 thereof in the vehicle width direction). (C1) of FIG. 3 is a schematic diagram showing the retractable footboard 40 in a side view, and (C2) of FIG. 3 is a schematic diagram showing the chevron-shaped protrusion 46 as viewed in the direction indicated by the arrow C2 illustrated in (C1) of FIG. 3.

For example, as shown in (A) of FIG. 4, the retractable footboard 40 may move from down to up of the vehicle when shifting from the retracted state to the unretracted in-use state.

For example, as shown in (B) of FIG. 4, the retractable footboard 40 may be configured such that, in the unretracted in-use state, the retractable footboard 40 is positioned at a vehicle lateral side, and in the retracted state, the retractable footboard 40 is rotated about a predetermined rotation center axis line so as to be at least partially positioned farther forward of the vehicle (for example, farther forward than a down frame portion of a vehicle body frame, the down frame portion extending rearward and downward of the vehicle from a head pipe) as compared to in the unretracted in-use state.

For example, as shown in (C) of FIG. 4, the retractable footboard 40 may be configured such that, in the unretracted in-use state, the retractable footboard 40 is positioned at a vehicle lateral side, and in the retracted state, the retractable footboard 40 is moved in the vehicle width direction so as to be at least partially positioned farther inward of the vehicle (for example, farther inward in the vehicle width direction than a down frame portion of a vehicle body frame, the down frame portion extending rearward and downward of the vehicle from a head pipe) as compared to in the unretracted in-use state. Here, the retractable footboard 40 configured to extend and retract in the vehicle width direction may be acceptable instead of the retractable footboard 40 configured to move in the vehicle width direction.

### (Other Embodiments)

The embodiments and variations, of which at least either one of description or illustration has been given herein, are for ease of understanding the present disclosure, and not for limiting the concept of the present disclosure. The foregoing embodiments and variations may be altered and/or adapted without departing from the spirit of the present disclosure. The spirit encompasses equivalent elements, modifications, omissions, combinations (for example, a combination of features of any embodiment and any variation), adaptations and/or alterations as would be appreciated by those skilled in the art based on the embodiments disclosed herein. The limitations in Claims are to be broadly interpreted based on the language employed in Claims and not limited to embodiments and variations described herein or during the prosecution of the present application. The embodiments and variations are to be construed as non-exclusive. For example, in this Description, the terms "preferably," "may," and "possible," are non-exclusive and mean "preferably, but not limited to," "may, but not limited to," and "possibly, but not limited to," respectively. The foregoing embodiments and variations may be altered and/or adapted.

### Reference Signs List

- 10: straddled vehicle
- 20: main rider seat
- 30: pair of left and right main footrests
- 40: pair of left and right retractable footboards
- 42: footboard main body
- 421: first end surface in thickness direction
- 422: second end surface in thickness direction
- 4221: outer side surface in vehicle width direction
- 423: side surface
- 44: main rider foot placement surface
- 46: chevron-shaped protrusion
- 461: ridgeline portion
- 462: forward slope
- 463: rear end surface
- L1: rotation center axis line

## Claims

1. A straddled vehicle (10) comprising:
a main rider seat (20) configured for a main rider who drives the straddled vehicle (10) to sit while driving the straddled vehicle (10);
a pair of left and right main footrests (30) arranged on vehicle lateral sides respectively with regard to a vehicle width direction and configured to allow the main rider who is driving the straddled vehicle (10) to place his/her feet thereon while sitting on the main rider seat (20); and
a pair of left and right retractable footboards (40) arranged with regard to the vehicle width direction and configured to allow the main rider who is driving the straddled vehicle (10) to place his/her feet thereon while sitting on the main rider seat (20), the pair of left and right retractable footboards (40) being disposed forward of the pair of left and right main footrests (30) with regard to a forward-rearward direction of the vehicle, the pair of left and right retractable footboards (40) being members different from the pair of left and right main footrests (30),
the pair of left and right retractable footboards (40) each including a main rider foot placement surface (44) configured to allow the main rider who is driving the straddled vehicle (10) to place his/her foot thereon while sitting on the main rider seat (20), the pair of left and right retractable footboards (40) being each configured to be able to maintain two stable stationary states,
the two stable stationary states including
an unretracted in-use state, in which the main rider foot placement surface (44) is visible in a plan view of the straddled vehicle (10) with regard to an up-down direction of the vehicle so that the main rider who is driving the straddled vehicle (10) is able to place his/her foot on the main rider foot placement surface (44) while sitting on the main rider seat (20), and
a retracted state, in which the main rider foot placement surface (44) is less visible in the plan view of the straddled vehicle (10) as compared to in the unretracted in-use state so that the main rider who is driving the straddled vehicle (10) is not able to place his/her foot on the main rider foot placement surface (44) while sitting on the main rider seat (20).

2. The straddled vehicle (10) according to claim 1, wherein the pair of left and right retractable footboards (40) are each positioned at vehicle lateral sides respectively with regard to the vehicle width direction at least when in the unretracted in-use state.

3. The straddled vehicle (10) according to claim 1 or 2, wherein the pair of left and right retractable footboards (40) are each positioned at vehicle lateral sides respectively with regard to the vehicle width direction both in the unretracted in-use state and in the retracted state.

4. The straddled vehicle (10) according to any one of claims 1 to 3, wherein the pair of left and right retractable footboards (40) are each configured such that
in the unretracted in-use state, the main rider foot placement surface (44) faces upward of the vehicle with regard to the up-down direction of the vehicle, and
in the retracted state, the main rider foot placement surface (44) faces inward of the vehicle with regard to the vehicle width direction.

5. The straddled vehicle (10) according to any one of claims 1 to 4, wherein the pair of left and right retractable footboards (40) each include
a footboard main body (42) having, on a first end surface (421) in thickness direction, the main rider foot placement surface (44), and
a chevron-shaped protrusion (46) disposed so as to protrude outward in the vehicle width direction from an outer side surface (4221) in the vehicle width direction, the outer side surface (4221) being formed by a second end surface (422) of the footboard main body (42) in the thickness direction in the retracted state,
the chevron-shaped protrusion (46) includes
a ridgeline portion (461) extending in the up-down direction of the vehicle in the retracted state, and
a forward slope (462) formed so as to, in the retracted state, extend in a direction in which the ridgeline portion (461) extends in a vehicle side view, and in a direction that is perpendicular to the direction in which the ridgeline portion (461) extends in the vehicle side view, the forward slope (462) being configured such that its height from the second end surface (422) in the thickness direction is higher at a rear end than at a forward end in the direction that is perpendicular to the direction in which the ridgeline portion (461) extends in the vehicle side view, and such that the rear end in the direction that is perpendicular to the direction in which the ridgeline portion (461) extends in the vehicle side view is connected to a forward end of the ridgeline portion (461).

6. The straddled vehicle (10) according to claim 5, wherein in each of the pair of left and right retractable footboards (40),
the chevron-shaped protrusion (46) further includes a rear end surface (463), a forward end of which is connected to the rear end of the ridgeline portion (461) in the retracted state, and
the chevron-shaped protrusion (46) is configured such that, in the retracted state, a length of the forward slope (462) in the direction that is perpendicular to the direction in which the ridgeline portion (461) extends is, in the vehicle side view, longer than a length of the rear end surface (463) in the direction that is perpendicular to the direction in which the ridgeline portion (461) extends.

7. The straddled vehicle (10) according to claim 5 or 6, wherein in each of the pair of left and right retractable footboards (40),
the footboard main body (42) further includes a side surface (423) that connects the first end surface (421) in the thickness direction to the second end surface (422) in the thickness direction,
the chevron-shaped protrusion (46) further includes a rear end surface (463), a forward end of which is connected to the rear end of the ridgeline portion (461) in the retracted state, and
the chevron-shaped protrusion (46) is configured such that, in the retracted state, the rear end surface (463) is connected to at least a part of the side surface (423) of the footboard main body (42) without interposition of the second end surface (422) in the thickness direction.

8. The straddled vehicle (10) according to claim 6 or 7, wherein the pair of left and right retractable footboards (40) are each configured such that, in the retracted state, the rear end surface (463) of the chevron-shaped protrusion (46) is inclined forward of the vehicle with regard to the forward-rearward direction of the vehicle in the vehicle side view so that the upper end of the rear end surface (463) is positioned forward of a lower end of the rear end surface (463).

9. The straddled vehicle (10) according to any one of claims 6 to 8, wherein the pair of left and right retractable footboards (40) are each configured to be capable of taking the retracted state and the unretracted in-use state by the footboard main body (42) rotating about a rotation center axis line (L1) that extends in the forward-rearward direction of the vehicle, and
the chevron-shaped protrusion (46) is configured such that, in the retracted state, the rear end surface (463) extends in a direction that is angled with respect to the rotation center axis line (L1) in the vehicle side view, and/or the rear end surface (463) is positioned upward of relative to the rotation center axis line (L1) with regard to the up-down direction of the vehicle in the vehicle side view.

10. The straddled vehicle (10) according to any one of claims 6 to 9, wherein in each of the pair of left and right retractable footboards (40), the chevron-shaped protrusion (46) is configured such that the rear end surface (463) is recessed toward the forward of the vehicle with regard to the forward-rearward direction of the vehicle.

11. The straddled vehicle (10) according to any one of claims 1 to 10, wherein in each of the pair of left and right retractable footboards (40), the main rider foot placement surface (44) is configured to be at least partially positioned upward of a corresponding main footrest out of the pair of left and right main footrests (30), and/or be positioned downward of the main rider seat (20) with regard to the up-down direction of the vehicle.

12. The straddled vehicle (10) according to any one of claims 1 to 11, wherein the pair of left and right retractable footboards (40) are each configured such that its length in the vehicle width direction in the unretracted in-use state is longer than its length in the vehicle width direction in the retracted state.
